# EUROPÄISCHE PATENTSCHRIFT

(11) **EP 2 193 741 B1**
(45) Veröffentlichungstag und Bekanntmachung des Hinweises auf die Patenterteilung: **25.04.2018**
(21) Anmeldenummer: 10002683.0
(22) Anmeldetag: 15.03.2010
(51) Int. Cl.: A47L 15/42, D06F 39/00, D06F 37/26

(54) **Haushaltgerät mit Wärmespeicher und Wärmekopplungstank**
Household appliance with heat reservoir and heat coupler tank
Appareil ménager doté d'un accumulateur thermique et d'un réservoir de cogénérateur

(43) Veröffentlichungstag der Anmeldung: 09.06.2010
(73) Patentinhaber: V-Zug AG, 6301 Zug (CH)
(72) Erfinder: Loichinger, Albert Johann, 8855 Wangen (CH)
(74) Vertreter: Sutter, Kurt

(56) Entgegenhaltungen:
- EP-A1- 2 096 203
- EP-A2- 1 864 603
- DE-A1- 3 609 277
- DE-A1- 19 622 882
- DE-A1- 19 758 061
- DE-A1-102008 022 890
- DE-U1- 29 618 243
- DE-U1- 29 703 763
- FR-A1- 2 934 485
- JP-A- 2001 008 880

## Beschreibung

### Gebiet der Erfindung

Die Erfindung betrifft ein Haushaltgerät mit einem Prozessraum zum Behandeln eines Guts mit unterschiedlichen Temperaturen und mit einem Wärmespeicher. Dabei kann es sich z.B. um einen Backofen, ein Dampfgargerät, eine Waschmaschine oder einen Geschirrspüler handeln, wobei der Prozessraum von der Muffel bzw. dem Bottich des Geräts gebildet wird.

### Hintergrund

Haushaltgeräte können mit Wärmespeichern versehen werden, z.B. um Wärme oder auch Kälte zwischen einzelnen, nacheinander oder auch parallel erfolgenden Prozessschritten zu transferieren. Dadurch wird die Energieeffizienz des Geräts verbessert.

EP1864603 beschriebt einen Geschirrspüler, in welchem die Wasserentkalkung als Wärmespeicher verwendet wird, wobei Wasser zwischen Bottich und Wärmespeicher umgepumpt wird, um Wärme zwischen Wasserentkalkung und Bottich zu transferieren.

EP2096203 beschreibt eine Waschmaschine mit einem Abwassertank, der als Wärmespeicher eingesetzt wird.

DE 196 22 882 beschreibt eine Geschirrspülmaschine mit einem Latentwärmespeicher. Dieser ist über eine Zwischenschicht mit dem Bottich verbunden. In die Zwischenschicht kann mit einem Verdampfer Dampf eingebracht werden, um den Latentwärmespeicher während der Trockenphase mit dem Bottich zu koppeln.

### Darstellung der Erfindung

Aufgabe der vorliegenden Erfindung ist es, ein Haushaltgerät der eingangs genannten Art bereitzustellen, bei welchem in einfacher Art der Wärmetransfer zwischen Prozessraum und Wärmespeicher initiiert, gesteuert bzw. unterbunden werden kann.

Diese Aufgabe wird vom Haushaltgerät gemäss Anspruch 1 erfüllt. Demgemäss ist ein Wärmekopplungstank vorgesehen, welcher auf einer ersten Seite an den Prozessraum und auf einer zweiten Seite an den Wärmespeicher angrenzt. Vorzugsweise liegt die zweite Seite gegenüber der ersten Seite. Weiter besitzt das Gerät Füllmittel, z.B. in Form einer Pumpe, zum programmgesteuerten Zuführen und Wegführen eines Kopplungsfluids in den bzw. aus dem Wärmekopplungstank. Dabei ist der Wärmewiderstand zwischen dem Prozessraum und dem Wärmespeicher wesentlich kleiner, wenn der Wärmekopplungstank mit dem Kopplungsfluid gefüllt ist, als wenn er leer ist.

Weiter ist die Erfindung dadurch gekennzeichnet, dass im Wärmespeicher eine Wärmespeicherflüssigkeit angeordnet ist, welche einen höheren Gefrierpunkt aufweist als das Kopplungsfluid, und
dass das Füllmittel eine Pumpe ist, welche Wasser aus einem anderen Teil des Haushaltgeräts in den Wärmekopplungstank und von dort wieder zurückpumpt oder dass das Füllmittel eine Ventilanordnung ist, um Frischwasser in den Wärmekopplungstank zu füllen und das Wasser sodann wieder ablaufen zu lassen.

Auf diese Weise wird es möglich, gezielt und bedarfsweise durch voll- oder auch teilweise Füllen des Wärmekopplungstanks eine Wärmebrücke zwischen Bottich und Wärmespeicher zu erstellen.

Das Kopplungsfluid ist ein förderbares Medium, insbesondere eine Flüssigkeit. Es kann sich jedoch z.B. auch um ein Granulat, ein Pulver oder einen Schaum handeln.

Der Wärmekopplungstank ist vorzugsweise an einer oder an mehreren Wänden des Prozessraums angeordnet und bildet so eine flächige Verbindung, wodurch bei gefülltem Tank ein geringer Wärmewiderstand erreicht werden kann.

In einer besonders bevorzugten Ausführung ist mindestens ein Teil des Wärmekopplungstanks unterhalb des Prozessraums und mindestens ein Teil des Wärmespeichers unterhalb des Wärmekopplungstanks angeordnet, so dass im Bodenbereich des Prozessraums stehendes Prozesswasser effizient mit dem Wärmespeicher gekoppelt werden kann.

In der Regel wird das Haushaltgerät eine Steuerung aufweisen, um das Gut im Prozessraum in mehreren Prozessphasen zu bearbeiten. Vorzugsweise ist diese Steuerung dazu ausgestaltet, in einem Teil der Prozessphasen den Wärmekopplungstank mit Kopplungsfluid mindestens teilweise zu füllen und in einem anderen Teil der Prozessphasen den Wärmekopplungstank mindestens teilweise zu leeren. Dadurch wird ein gesteuertes Ein- und Ausschalten der Wärmebrücke zwischen Prozessraum und Wärmespeicher erreicht. Beispielsweise kann die Steuerung dazu ausgestaltet sein, zu einem ersten Zeitpunkt den Prozessraum bei leerem Wärmekopplungstank zu heizen und zu einem zweiten, späteren Zeitpunkt dem aufgeheizten Prozessraum Wärme zu entziehen, indem der Wärmekopplungstank gefüllt wird.

Die Erfindung kann im Rahmen unterschiedlicher Haushaltgeräte realisiert werden. Besonders geeignet ist die Erfindung für:
- Geschirrspüler: In diesem Falle bildet der Bottich den anspruchsgemässen Prozessraum.
- Waschmaschinen: Auch in diesem Falle bildet der Bottich den anspruchsgemässen Prozessraum.
- Backöfen oder Dampfgargeräte: In diesem Falle bildet die Muffel des Geräts den Prozessraum.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung einer ersten Ausführung eines Geschirrspülers,
Fig. 2 eine schematische Darstellung einer zweiten Ausführung eines Geschirrspülers und
Fig. 3 eine schematische Darstellung einer Waschmaschine.

### Wege zur Ausführung der Erfindung

Wie erwähnt, kann die vorliegende Erfindung in unterschiedlichen Haushaltgeräten eingesetzt werden. Im Folgenden werden einige Beispiele beschrieben.

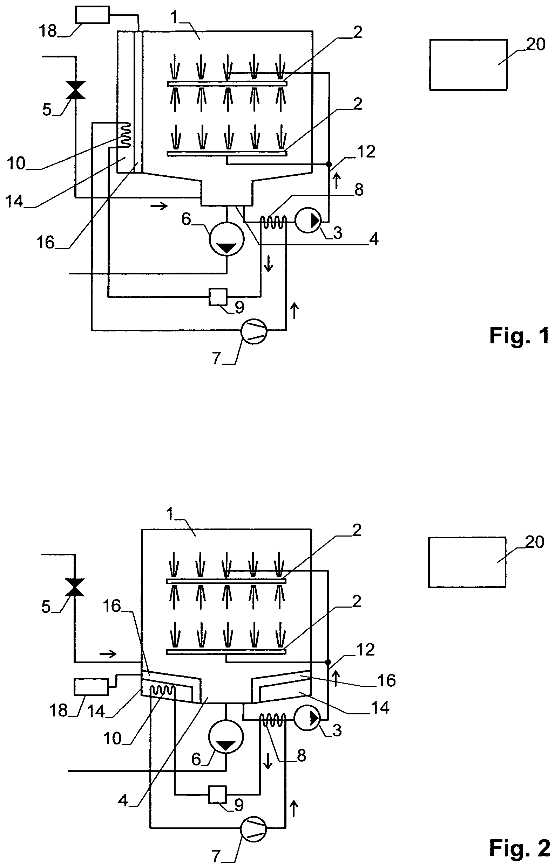

Geschirrspüler mit seitlichem Kopplungstank:
Der Geschirrspüler nach Fig. 1 besitzt als Prozessraum einen Bottich 1 zur Aufnahme des Spülguts, wie z.B. Geschirr und Besteck. Im Bottich 1 sind hierzu z.B. in bekannter Weise Geschirrkörbe vorgesehen (nicht gezeigt). Das Spülgut wird mit Prozesswasser aus Sprühvorrichtungen, wie z.B. drehbaren Sprüharmen 2 und/oder anderen Düsenanordnungen, beaufschlagt. Hierzu ist am Bottich 1 ein Prozesswasserkreislauf mit einer Zirkulationspumpe 3 vorgesehen, mit welcher das Wasser aus einem Sumpf 4 des Bottichs 1 durch eine Leitung 12 zu den Sprühvorrichtungen 2 gefördert werden kann. Am Prozesswasserkreislauf kann eine konventionelle Heizung vorgesehen sein (nicht gezeigt), um das Prozesswasser zu erwärmen.

Weiter verfügt das Gerät über ein Frischwasserventil 5, durch welches frisches Prozesswasser, gegebenenfalls über eine Aufbereitungsanlage, wie z.B. eine Entsalzungsanlage (nicht gezeigt), dem Bottich 1 zugeführt werden kann.

Zum Abführen von Wasser aus dem Bottich 1 dient eine Ablaufpumpe 6.

Das Gerät besitzt eine Wärmepumpe mit einen Kompressor 7, einem Kondensator 8, einem Expansionsventil 9 und einem Verdampfer 10.

Der Kondensator 8 ist thermisch mit dem Bottich 1 oder dem Prozesswasserkreislauf verbunden. Im vorliegenden Beispiel ist er an der Leitung 12 und/oder der Förderpumpe 3 angeordnet. Alternativ oder zusätzlich hierzu kann der Kondensator 8 thermisch mit dem Bottich 1 gekoppelt sein.

Der Verdampfer 10 ist thermisch mit einem Wärmespeicher 14 gekoppelt.

Der Wärmespeicher 14 ist vorzugsweise als Tank ausgebildet, in welchem eine Wärmespeicherflüssigkeit angeordnet ist. Dabei kann es sich z.B. um Wasser handeln, oder die Wärmespeicherflüssigkeit kann zumindest teilweise aus Wasser bestehen. Wasser ist bevorzugt aufgrund seiner hohen Wärmekapazität und toxischen Unbedenklichkeit.

Der Wärmespeicher 10 ist flächig seitlich an mindestens einer Wand des Bottichs 1 angeordnet, aber von dieser durch einen Wärmekopplungstank 16 getrennt. Der Wärmekopplungstank 16 besitzt ungefähr die gleiche Fläche wie der Wärmespeicher 14 in seiner Ausdehnung parallel zur Bottichwand, aber seine Ausdehnung senkrecht zur Bottichwand kann z.B. nur wenige Millimeter betragen.

In der in Fig. 1 dargestellten Ausführung ist der Wärmekopplungstank 16 an einer vertikalen Seitenwand des Bottichs 1 angeordnet, aus Gründen, die im Rahmen der unten beschriebenen Funktionsweise des Geräts klar werden. Denkbar ist jedoch auch eine Anordnung des Wärmekopplungstank an einer horizontalen Wand des Bottichs 1, namentlich der Decke oder des Bodens des Bottichs 1. Ein entsprechendes Ausführungsbeispiel wird weiter unten beschrieben.

Der Wärmekopplungstank 16 ist mit einem nur schematisch dargestellten Füllmittel 18 verbunden, welches dazu dient, dem Wärmekopplungstank 16 ein Kopplungsfluid zuzuführen bzw. den Wärmekopplungstank 16 vom Kopplungsfluid zu entleeren. Das Kopplungsfluid besteht vorzugsweise wiederum zumindest teilweise aus Wasser.

Das Füllmittel 18 kann zum Beispiel eine Pumpe sein, welches Wasser aus einem anderen Teil des Geräts in den Wärmekopplungstank 16 und von dort wieder zurück pumpt. Das Füllmittel 18 kann jedoch z.B. auch von einer Ventilanordnung gebildet werden, welche in der Lage ist, Frischwasser in den Wärmekopplungstank 16 zu füllen und das Wasser sodann wieder ablaufen zu lassen.

Die in Fig. 1 dargestellten Komponenten des Geräts werden von einer Steuerung 20 gesteuert.

Im Folgenden wird ein Programmablauf beschrieben, wie er unter Nutzung des Wärmekopplungstanks 16 stattfinden kann.

In einer ersten Prozessphase, welche im Folgenden Hauptwaschgang genannt wird und der eine optionale Vorspülphase vorausgehen kann, wird die Wärmepumpe 7, 8, 9, 10 in Betrieb genommen, um dem Wärmespeicher 14 Wärme zu entziehen und diese dem Prozesswasser im Bottich zuzuführen. Während dieser Phase ist der Wärmekopplungstank 16 leer, so dass der Wärmewiderstand zwischen Wärmespeicher 14 und Bottich 1 hoch ist. Mit der Wärmepumpe 7, 8, 9, 10 kann die Temperatur im Wärmespeicher 14 auch auf oder bis unter den Gefrierpunkt der Wärmespeicherflüssigkeit abgesenkt werden. Falls nötig kann in dieser Phase zusätzlich eine elektrische Heizung eingesetzt werden, um dem Prozesswasser bzw. dem Bottich 1 noch mehr Energie zuzuführen. Das Prozesswasser wird in der Hauptspülphase z.B. maximal auf 40 °C (je nach Prozesstyp jedoch auch bis zu 70°C) erwärmt.

An die Hauptspülphase schliesst optional eine Zwischenspülphase an, in welcher das Wasser im Bottich ersetzt wird durch Frischwasser, mit welchen das Geschirr gespült wird. Auch während dieser Phase bleibt der Wärmekopplungstank 16 leer.

Hierauf folgt als weitere Prozessphase die Klarspülphase, in welcher dem Bottich 1 wiederum Frischwasser zugeführt wird. Das Wasser wird mit Klarspüler versetzt und auf relativ hohe Temperatur von z.B. 60 °C erwärmt. Hierzu kann wiederum die Wärmepumpe und/oder die nicht gezeigte elektrische Heizung eingesetzt werden. Während der Zwischenspülphase bleibt der Wärmekopplungstank 16 wiederum leer.

Danach folgt als letzte Prozessphase die Trocknungsphase. Während dieser Phase wird das Wasser aus dem Bottich abgepumpt. Der Wärmekopplungstank 16 wird mit Flüssigkeit gefüllt, so dass der Wärmewiderstand zwischen Wärmespeicher 14 und der Wand des Bottichs 1 drastisch absinkt. Dadurch bildet die entsprechende Bottichwand eine Kühlfläche, an der sich Wasser aus der feuchten Bottichluft abscheiden kann. Das abgeschiedene Wasser läuft durch den Sumpf 4 ab.

Nach dem Trocknen ist der Reinigungsvorgang abgeschlossen. Der Wärmespeicher 14 kann sich nun wieder auf Zimmertemperatur erwärmen, soweit er diese noch nicht erreicht hat. Sodann kann er von der Wärmepumpe für den nächsten Reinigungsprozess wieder verwendet werden.

Denkbar ist es, als Wärmekopplungsfluid für den Wärmekopplungstank 16 Wasser aus dem Salzlaugenbehälter einer Entkalkungsanlage des Geräts zu verwenden. Dies hat den Vorteil, dass dieses Wasser einen sehr tiefen Gefrierpunkt hat, so dass der Wärmespeicher 14 auf relativ tiefe Temperaturen gebracht werden kann, ohne dass das Wärmekopplungsfluid gefriert.

Geschirrspüler mit unterseitigem Kopplungstank:
Wie erwähnt, können der Kopplungstank 16 und der Wärmespeicher 14 an einer oder mehreren der vertikalen Wände, an der Decke und/oder am Boden und/oder der Türe des Bottichs 1 angeordnet werden.

Vorzugsweise wird mindestens ein Teil des Wärmekopplungstanks 16 unterhalb des Bottichs 1 und mindestens ein Teil des Wärmespeichers 14 unterhalb des Wärmekopplungstanks 16 angeordnet, so dass eine thermische Ankopplung an Prozesswasser erreicht wird, das im Bodenbereich des Bottichs 1 steht.

Eine entsprechende Ausführung ist in Fig. 2 dargestellt. Hier ist der Wärmespeicher ringförmig um den Sumpf 4 angeordnet und durch den ebenfalls ungefähr ringförmigen Wärmekopplungstank 16 vom Bottich getrennt.

Die Funktionsweise dieses Geräts kann grundsätzlich jener des Geräts von Fig. 1 entsprechen. Besonders geeignet ist das hier beschriebene Gerät jedoch dafür, dem Prozesswasser vor dessen Ableitung aus dem Bottich 1 Energie zu entziehen.

So kann das Gerät in einer alternativen Funktionsweise z.B. wie folgt betrieben werden.

In der Hauptspülphase ist der Wärmekopplungstank 16 zunächst wiederum leer und das Prozesswasser wird aufgeheizt. Zum Aufheizen wird z.B. eine elektrische Heizung verwendet, oder es wird, wie oben beschrieben, ein seitlich am Bottich angeordneter Wärmespeicher 14 eingesetzt, dem von der Wärmepumpe Wärme entzogen wird, um sie dem Bottich zuzuführen. Am Schluss der Hauptspülphase wird der Wärmekopplungstank 16 unter dem Boden des Bottichs 1 geflutet, so dass das im Bodenbereich des Bottichs stehende oder fliessende warme Prozesswasser thermisch mit dem Wärmespeicher 14 gekoppelt wird und einen Teil seiner Wärme dem Wärmespeicher 14 abgibt. Sodann wird das nun teilweise abgekühlte Prozesswasser abgeführt und der Wärmekopplungstank 16 wird entleert.

Jetzt wird eine Zwischenspülphase durchgeführt. Während dieser Zwischenspülphase bleibt der Wärmekopplungstank 16 leer.

Danach folgt die Klarspülphase. Zu deren Beginn wird kaltes Frischwasser zugeführt. Um das Frischwasser zu erwärmen, kommen beispielsweise folgende Varianten in Frage:
- Der Wärmekopplungstank 16 wird wieder geflutet, so dass ein Teil der Wärme aus dem Wärmespeicher 14 zu einer Erwärmung des Frischwassers beitragen kann. Danach kann der Wärmekopplungstank 16 wieder entleert werden, worauf das Prozesswasser im Bottich mit anderen Mitteln, wie im ersten Ausführungsbeispiel beschrieben, erwärmt wird.
- Wie in Fig. 2 gezeigt, kann eine Wärmepumpe vorgesehen sein, welche dem Wärmespeicher Wärme entzieht und dem Prozesswasser die Wärme zuführt. In diesem Fall bleibt der Wärmekopplungstank 16 während dem Aufheizen des Prozesswassers leer.

In dieser Verfahrensvariante kann der Wärmespeicher also dazu verwendet werden, Wärme aus einer ersten Prozessphase in eine spätere zweite Prozessphase zu transferieren.

Waschmaschine:

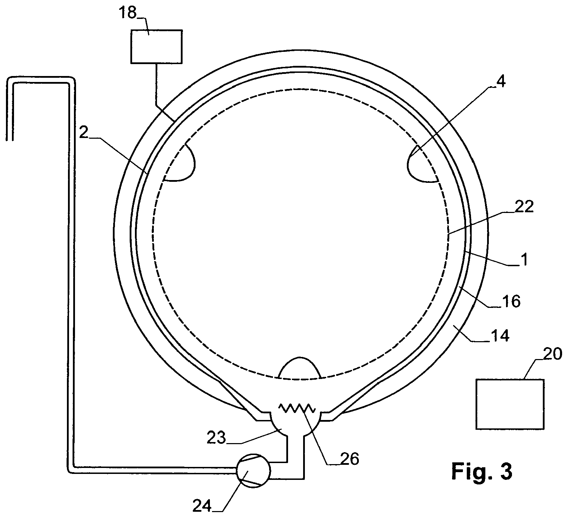

Fig. 3 zeigt schematisch eine Waschmaschine mit einem als Prozessraum dienenden, trommelförmigen Bottich 1, in welchem eine um eine vorzugsweise horizontale Drehachse drehbare Trommel 22 angeordnet ist. Der Bottich 1 ist federnd in einem nicht gezeigten Gehäuse angeordnet. Frischwasser kann dem Bottich über eine (nicht gezeigte) Zufuhrleitung zugeführt werden, Abwasser kann den Bottich über einen Ablaufbereich 23 und ein Ablaufventil 24 verlassen. Im Ablaufbereich ist weiter eine elektrische Heizung 26 vorgesehen.

An der Aussenseite des Bottichs 1 ist wiederum ein Wärmekopplungstank 16 angeordnet. Vorzugsweise ist hierzu der Bottich 1 doppelwandig ausgebildet, wobei der Wärmekopplungstank 16 zwischen den beiden Wänden des Bottichs ausgebildet ist. Der Wärmekopplungstank 16 ist im Wesentlichen um den ganzen Bottich 1 herum angeordnet, so dass sich eine grosse Kontaktfläche ergibt.

Um den Wärmekopplungstank 16 ist seinerseits der Wärmespeicher 14 angeordnet, wodurch auch er eine grosse Kontaktfläche mit dem Wärmekopplungstank 16 besitzt. Der Wärmespeicher 14 kann aus einem Tank mit einer Flüssigkeit oder auch aus einer festen bzw. pulverförmigen Masse bestehen, die eine hohe Wärmekapazität besitzt oder auch im relevanten Temperaturbereich phasenumwandeln kann. Wiederum ist ein Füllmittel 18 vorgesehen, welches dazu dient, dem Wärmekopplungstank 16 ein Kopplungsfluid zuzuführen bzw. den Wärmekopplungstank 16 vom Kopplungsfluid zu entleeren

Ein typischer Betriebsablauf des Geräts nach Fig. 3 ist wie folgt:
- Zunächst wird (nach einem optionalen Vorwaschgang) ein Hauptwaschgang durchgeführt. Hierzu wird dem Bottich 1 Prozesswasser mit Waschmittel zugeführt und das Prozesswasser wird mit der Heizung 26 erwärmt. Während diesem Vorgang ist der Wärmekopplungstank leer, so dass der Wärmespeicher 14 relativ kühl bleibt.
- Gegen Schluss des Hauptwaschgangs wird der Wärmekopplungstank 16 gefüllt, so dass das Prozesswasser einen Teil seiner Wärme an den Wärmespeicher abgibt. Dann wird der Bottich 1 entleert.
- Nun wird Frischwasser für den Spülgang zugeführt. Dabei bleibt der Wärmekopplungstank gefüllt, so dass der Wärmespeicher 14 einen Teil seiner Wärme an das Frischwasser bzw. Prozesswasser abgeben kann. So kann ohne zusätzlichen Energieaufwand das Spülwasser erwärmt werden, so dass dieses eine bessere Spülwirkung zu entfalten vermag. Bei einem Nachfolgeprozess, vor allem bei Mehrfamilienhäusern, kann nun Wärme bereits für das erste Bad des Prozesses vom Wärmespeicher 14 genutzt werden.
- Sodann wird das Spülwasser abgelassen und es folgt optional eine Trocknungsphase, in welchem die Wäsche z.B. geschleudert wird. Während dieser Zeit ist vorteilhafterweise der Wärmekopplungstank voll, um mehr Masse zu haben für die Standfestigkeit und Reduktion der Vibrationen oder leer sein.

In der in Fig. 3 gezeigten Ausführung wird somit keine Wärmepumpe verwendet, was das Gerät relativ einfach macht. Denkbar ist allerdings auch der Einsatz einer Wärmepumpe, um Wärme vom Bottich 1 in den Wärmespeicher 14 oder vom Wärmespeicher 14 zurück in den Bottich zu fördern.

Backofen, Dampfgarer, Mikrowellengeräte oder auch Kombinationen:
Bei einem Backofen oder Dampfgarer kann z.B. die Muffel (d.h. der Gar- bzw. Backraum) den Prozessraum bilden, der über einen Wärmekopplungstank mit dem Wärmespeicher verbunden ist. Auch in diesem Fall ist der Wärmekopplungstank vorzugsweise an mindestens einer der Wände des Prozessraums angeordnet und befindet sich zwischen dem Prozessraum und dem Wärmespeicher.

In einem solchen Gerät können die Speisen beispielsweise zunächst bei leerem Wärmekopplungstank erwärmt werden. Nachdem die Speisen fertig sind, werden sie dem Prozessraum entnommen, und nun kann der Wärmekopplungstank gefüllt werden, so dass ein Teil der Restwärme des Prozessraums in den Wärmespeicher übergehen kann. Diese Wärme kann später wieder genutzt werden, insbesondere wenn ein unterkühlbarer Latentwärmespeicher eingesetzt wird, vgl. nächster Abschnitt.

### Unterkühlbarer Latentwärmespeicher

In einer bevorzugten Ausführung ist der Wärmespeicher ein unterkühlbarer Latentwärmespeicher, d.h. ein Latentwärmespeicher, welcher zwei Phasenzustände besitzt, z.B. fest und flüssig, wobei der dem höheren Temperaturbereich zugehörige erste Phasenzustand deutlich unter die Phasenübergangstemperatur unterkühlt werden kann. Dieser unterkühlbare Latentwärmespeicher ist weiter vorzugsweise mit einem Initiator ausgestattet, um den Phasenübergang vom ersten Phasenzustand zurück in den zweiten Phasenzustand auszulösen oder zumindest zu fördern, wenn der Latentwärmespeicher unterkühlt ist. Dadurch ist es möglich, die latente Wärme zu einem gewünschten Zeitpunkt gezielt freizusetzen. Diese Ausführung des Wärmespeichers kann grundsätzlich für alle oben genannten Gerätetypen, wie Geschirrspüler, Waschmaschinen oder Gargeräte eingesetzt werden.

In diesem Fall kann dem Latentwärmespeicher durch Füllen des Wärmekopplungstanks bei warmem Prozessraum Wärme zugeführt werden, um ihn in den ersten Phasenzustand zu bringen. Sodann kann das Gerät abkühlen, der Latentwärmespeicher bleibt aber unterkühlt im ersten Phasenzustand. Wird die Wärme sodann für einen späteren Prozessgang, z.B. für einen späteren Reinigungsgang oder Gargang benötigt, so wird der Wärmekopplungstank gefüllt und der Initiator wird betätigt, so dass Wärme frei wird, welche zumindest teilweise wieder an den Prozessraum zurückgegeben werden kann. Danach wird der Wärmekopplungstank entleert, und der Prozessraum wird nötigenfalls weiter erwärmt.

Der Latentwärmespeicher basiert auf einem "Phasenumwaldungsmaterial" (Phase Change Material, PCM), welches einen Phasenübergang bei einer Phasenübergangstemperatur Tc durchläuft, welche vorzugweise über 50°C und unter 200°C liegt, so dass es mit der Restwärme typischer Backofentemperaturen geschmolzen werden kann. Weiter sollte das Material bis mindestens auf Raumtemperatur unterkühlt werden können, damit die latente Wärme bis zur nächsten Nutzung gespeichert werden kann. Schliesslich muss die Kristallisation des unterkühlten Materials bzw. der Übergang vom ersten (höheren) Phasenzustand zum zweiten (tieferen) Phasenzustand gezielt ausgelöst werden können, damit die latente Wärme zum richtigen Zeitpunkt zurück in den Muffelbereich gefördert werden kann. Zu diesem Zweck ist ein Initiator vorgesehen.

Es sind verschiedene Materialien bekannt, welche geeignete Eigenschaften als Phasenübergangsmaterial besitzen. Beispielsweise kann Natriumacetat-Trihydrat (Schmelzpunkt 58 °C), im US Patent 5728316 genannte Mischung von Magnesiumnitrat-Hexahydrat Mg(NO3)2 · 6 H2O mit Lithiumnitrat LiN03 (Schmelzpunkt 75.6 °C) und ähnliche Mischungen bekannt aus EP 1 087 003 oder Kalium-Aluminium-Dodecyhydrat (Schmelzpunkt 92 °C) eingesetzt werden, sowie die weiteren in EP 689 024 und EP 1 186 838 genannten Materialien. Die meisten Materialien dieser Art nutzen einen fest-flüssig Phasenübergang. Die Art des Phasenübergangs spielt jedoch im vorliegenden Zusammenhang nur untergeordnete Rolle. Entscheidend ist, dass der Latentwärmespeicher bei thermischer Ankopplung an die Muffel durch Aufheizen in den ersten Phasenzustand gebracht und danach unterkühlt werden kann.

Um das unterkühlte Material gezielt zurück in seinen zweiten Phasenzustand zu bringen, sind dem Fachmann verschiedene Typen von Initiatoren bekannt. So kann ein mechanischer Initiator eingesetzt werden, der beispielsweise in der Art eines "Knackfrosches" ausgebildet ist, d.h. als Metallplatte, welche ihre Konfiguration bei Kraftanlegung sprungweise ändert. Bei Verwendung eines mechanischen Initiators wird der Initiator mit einem elektromagnetischen Aktuator verbunden, der den Initiator betätigen kann.

Bekannt sind auch Initiatoren durch Ultraschall, Druck, chemische Initiatoren als Keimbildner sowie elektrische Initiatoren, mit denen die Kristallisation direkt durch Anlegung einer Spannung initiiert wird, vgl. z.B. EP 689 024 und EP 1 186 838.

Wird der Latentwärmespeicher mit einer Wärmepumpe kombiniert, kann auch die Wärmepumpe selbst als Initiator verwendet werden, indem der mit dem Latentwärmespeicher verbundene Wärmetauscher der Wärmepumpe auf eine so tiefe Temperatur abgekühlt wird, dass der Übergang vom ersten zum zweiten Phasenzustand spontan erfolgt.

Bemerkungen:
Wie eingangs erwähnt, handelt es sich beim Wärmespeicher vorzugsweise um einen Tank mit Wärmespeicherflüssigkeit. Wird diese mittels einer Wärmepumpe gekühlt, wie dies z.B. im Rahmen von Fig. 1 beschrieben wurde, so erfolgt die Abkühlung vorzugsweise zumindest teilweise bis unter den Gefrierpunkt (Erstarrungspunkt) der Wärmespeicherflüssigkeit, so dass deren latente Wärme, die durch den Phasenübergang zur Verfügung gestellt wird, genutzt werden kann. In diesem Fall besitzt die Wärmespeicherflüssigkeit vorzugsweise einen höheren Gefrierpunkt als das Wärmekopplungsfluid, so dass letztere auch gefördert werden kann, selbst wenn die Wärmespeicherflüssigkeit (teilweise) erstarrt ist.

Dank dem Wärmekopplungstank kann der Wärmekontakt zwischen dem Prozessraum und Wärmespeicher gezielt und gesteuert in einfacher Weise verändert werden. Als Stellgrössen zum Einleiten einer Befüllung oder Entleerung des Wärmekopplungstanks kommen z.B. Zeitpunkt, Füllgrad, Temperatur des Bottichs oder Temperatur des Wärmespeichers in Frage, oder eine Kombination mehrerer dieser Grössen.

Der Wärmekopplungstank erlaubt es, den Wärmespeicher unabhängig vom oder zeitversetzt zum Prozessraum zu wärmen oder zu kühlen und ihn bei Bedarf durch Füllen des Wärmekopplungstanks thermisch an den Prozessraum anzukoppeln. Es werden hierzu keine komplizierten mechanischen Stellglieder benötigt.

Der Grad der Wärmekopplung kann über den Füllgrad stufenlos eingestellt werden.

Der Wärmekopplungstank kann an einer oder mehreren Wänden des Bottichs angeordnet sein. Denkbar ist auch eine Anordnung im Inneren des Bottich.

Zusätzlich kann dem Wärmespeicher Wärme zugeführt werden, indem Abwasser in thermischen Kontakt mit ihm gebracht wird, bevor es abgelassen wird. Beispielsweise kann der in EP2096203 beschriebene Abwassertank 6 an der Aussenseite des in Fig. 3 dargestellten Wärmespeichers 14 angeordnet werden.

Statt einer Wärmepumpe kann, wie bereits erwähnt, auch eine andere Wärme- oder Kältequelle verwendet werden.

Der Wärmespeicher sowie der Wärmekopplungstank bieten auch gewisse Schalldämmung, so dass Geräusche aus dem Prozessraum, wie sie z.B. beim Geschirrspülen auftreten können, besser gedämpft werden.

## Patentansprüche

1. Haushaltgerät mit einem Prozessraum (1) zum Behandeln eines Guts mit unterschiedlichen Temperaturen und mit einem Wärmespeicher (14), umfassend
einen Wärmekopplungstank (16), welcher auf einer ersten Seite an den Prozessraum (1) und auf einer zweiten Seite an den Wärmespeicher (14) angrenzt, und
Füllmittel (18) zum programmgesteuerten Zuführen und Wegführen eines Kopplungsfluids in den bzw. aus dem Wärmekopplungstank (16),
wobei ein Wärmewiderstand zwischen dem Prozessraum (1) und dem Wärmespeicher (14) kleiner ist, wenn der Wärmekopplungstank (16) mit dem Kopplungsfluid gefüllt ist, als wenn der Wärmekopplungstank (16) nicht mit dem Kopplungsfluid gefüllt ist,
**dadurch gekennzeichnet, dass** im Wärmespeicher (14) eine Wärmespeicherflüssigkeit angeordnet ist, welche einen höheren Gefrierpunkt aufweist als das Kopplungsfluid, und
dass das Füllmittel eine Pumpe ist, welche Wasser aus einem anderen Teil des Haushaltgeräts in den Wärmekopplungstank (16) und von dort wieder zurückpumpt oder dass das Füllmittel eine Ventilanordnung ist, um Frischwasser in den Wärmekopplungstank (16) zu füllen und das Wasser sodann wieder ablaufen zu lassen.

2. Haushaltgerät nach Anspruch 1 wobei das Kopplungsfluid mindestens teilweise aus Wasser besteht.

3. Haushaltgerät nach einem der vorangehenden Ansprüche, wobei mindestens ein Teil des Wärmekopplungstanks (16) unterhalb des Prozessraums (1) und mindestens ein Teil des Wärmespeichers (14) unterhalb des Wärmekopplungstanks (16) angeordnet ist.

4. Haushaltgerät nach einem der vorangehenden Ansprüche, wobei die Wärmespeicherflüssigkeit mindestens teilweise aus Wasser besteht.

5. Haushaltgerät nach einem der vorangehenden Ansprüche, wobei das Haushaltgerät weiter eine Wärmepumpe (7 - 10) aufweist, um Wärme zwischen dem Prozessraum (1) und dem Wärmespeicher (14) zu fördern.

6. Haushaltgerät nach einem der vorangehenden Ansprüche, wobei das Haushaltgerät eine Steuerung (20) aufweist, um das Gut im Prozessraum (1) in mehreren Prozessphasen zu bearbeiten, wobei die Steuerung (20) dazu ausgestaltet ist, in einem Teil der Prozessphasen den Wärmekopplungstank (16) mit Kopplungsfluid mindestens teilweise zu füllen und in einem anderen Teil der Prozessphasen den Wärmekopplungstank (16) mindestens teilweise zu leeren.

7. Haushaltgerät nach Anspruch 6, die Steuerung (20) dazu ausgestaltet ist, zu einem ersten Zeitpunkt den Prozessraum (1) bei leerem Wärmekopplungstank (16) zu heizen, und zu einem zweiten, späteren Zeitpunkt dem aufgeheizten Prozessraum (1) Wärme zu entziehen, indem der Wärmekopplungstank (16) gefüllt wird.

8. Haushaltgerät nach einem der vorangehenden Ansprüche, wobei der Wärmespeicher (14) ein unterkühlbarer Latentwärmespeicher ist und wobei das Haushaltgerät einen Initiator aufweist, um einen Phasenübergang im unterkühlten Latentwärmespeicher auszulösen oder auch zu fördern.

9. Haushaltgerät nach einem der vorangehenden Ansprüche, wobei das Haushaltgerät ein Geschirrspüler ist und der Prozessraum (1) ein Bottich des Geschirrspülers ist.

10. Haushaltgerät nach den Ansprüchen 6 und 9, wobei das Haushaltgerät eine Steuerung (20) aufweist, welche dazu ausgestaltet ist,
für einen Hauptwaschgang und/oder eine Klarspülphase bei leerem Wärmekopplungstank (16) dem Bottich mit der Wärmepumpe zu heizen und den Wärmespeicher (14) zu kühlen, und sodann
für eine Trocknungsphase den Wärmekopplungstank (16) zu füllen um eine Kühlfläche am Bottich zu bilden.

11. Haushaltgerät nach einem der Ansprüche 1 bis 8 wobei das Haushaltgerät eine Waschmaschine ist und der Prozessraum (1) ein Bottich der Waschmaschine ist.

12. Haushaltgerät nach Anspruch 11, wobei der Wärmekopplungstank (16) um den Bottich herum angeordnet ist und der Wärmespeicher (14) um den Wärmekopplungstank (16) angeordnet ist.

13. Haushaltgerät nach einem der Ansprüche 11 oder 12, wobei es dazu ausgestaltet ist, das Gut mit vollem Wärmekopplungstank (16) zu schleudern.

14. Haushaltgerät nach einem der Ansprüche 1 bis 8, wobei das Haushaltgerät ein Backofen oder ein Dampfgargerät ist und wobei der Prozessraum (1) eine Muffel des Backofens bzw. Dampfgargeräts ist.

15. Haushaltgerät nach einem der vorangehenden Ansprüche, mit einem Abwassertank zum Abführen von gebrauchtem Prozesswasser aus dem Prozessraum (1), wobei der Abwassertank thermisch in Kontakt mit dem Wärmespeicher (14) steht.

## Claims

1. Household appliance with a process chamber (1) for treating ware with different temperatures and with a heat accumulator (14), comprising
a heat coupling tank (16), which is adjacent to the process chamber (1) on a first side and with a heat accumulator (14) on a second side, and
filling means (18) for supplying and discharging a coupling fluid into and from the heat coupling tank (16), respectively, in a program controlled manner,
wherein a heat resistance between the process chamber (1) and the heat accumulator (14) is smaller when the heat coupling tank (16) is filled with the coupling fluid than when the heat coupling tank (16) is not filled with the coupling fluid,
**characterized in that** a heat accumulator liquid is arranged inside the heat accumulator (14), which has a higher freezing point than the coupling fluid, and
**in that** the filling means is a pump which pumps water from another part of the household appliance into the heat coupling tank (16) and pumps it back from there or **in that** the filling means is a valve arrangement for filling fresh water into the heat coupling tank (16) and thereafter discharging the water again.

2. Household appliance according to claim 1, wherein the coupling fluid consists at least partly of water.

3. Household appliance according to one of the preceding claims, wherein at least a part of the heat coupling tank (16) is arranged below the process chamber (1) and at least a part of the heat accumulator (14) is arranged below the heat coupling tank (16).

4. Household appliance according to one of the preceding claims, wherein the heat accumulator liquid consists at least partly of water.

5. Household appliance according to one of the preceding claims, wherein the household appliance further has a heat pump (7 - 10) for transporting heat between the process chamber (1) and the heat accumulator (14).

6. Household appliance according to one of the preceding claims, wherein the household appliance has a controller (20) for treating the ware inside the process chamber (1) during multiple process phases, wherein the controller (20) is adapted to fill the heat coupling tank (16) with coupling fluid at least partly in a part of the process phases and to empty the heat coupling tank (16) at least partly during another part of the process phases.

7. Household appliance according to claim 6, wherein the controller (20) is adapted to heat up the process chamber (1) at a first instant when the heat coupling tank (16) is empty, and to extract heat from the heated up process chamber (1) at a second, later instant by filling the heat coupling tank (16).

8. Household appliance according to one of the preceding claims, wherein the heat accumulator (14) is a latent heat accumulator, which can be supercooled, and wherein the household appliance has an initiator for triggering a phase transition in the supercooled latent heat accumulator or also for supporting it.

9. Household appliance according to one of the preceding claims, wherein the household appliance is a dishwasher and the process chamber (1) is a vat of the dishwasher.

10. Household appliance according to claims 6 and 9, wherein the household appliance has a controller (20) which is adapted
to heat up the vat with the heat pump and to cool down the heat accumulator (14) when the heat coupling tank (16) is empty, for a main washing cycle and/or a rinsing phase, and thereafter
to fill up the heat coupling tank (16) for a drying phase in order to form a cooping surface at the vat.

11. Household appliance according to one of the claims 1 to 8, wherein the household appliance is a washing machine and the process chamber (1) is a vat of the washing machine.

12. Household appliance according to claim 11, wherein the heat coupling tank (16) is arranged around the vat and the heat accumulator (14) is arranged around the heat coupling tank (16).

13. Household appliance according to one of the claims 11 or 12, wherein it is adapted to centrifuge the ware with a full heat coupling tank (16).

14. Household appliance according to one of the claims 1 to 8, wherein the household appliance is a baking oven or a steam cooker and wherein the process chamber (1) is a muffle of the baking oven or steam cooker, respectively.

15. Household appliance according to one of the preceding claims, with a waste water tank for discharging used process water from the process chamber (1), wherein the waste water tank is in thermal contact with the heat accumulator (14).

## Revendications

1. Appareil ménager avec une chambre de processus (1) pour traiter de la marchandise avec des différentes températures, et avec un accumulateur de chaleur (14), comprenant
un récipient de couplage de chaleur (16), qui est adjacent à la chambre de processus (1) d'un premier côté et à l'accumulateur de chaleur (14) d'un deuxième côté, et
des moyens de remplissage (18) pour alimenter et décharger un liquide de couplage dans le ou bien du récipient de couplage de chaleur (16) de manière commandée par programme,
une résistance de chaleur entre la chambre de processus (1) et l'accumulateur de chaleur (14) étant inférieure en cas le récipient de couplage de chaleur (16) est rempli avec le fluide de couplage qu'en cas le récipient de couplage de chaleur (16) n'est pas rempli avec le fluide de couplage,
**caractérisé en ce qu'**un liquide d'accumulateur de chaleur est arrangé à l'intérieur de l'accumulateur de chaleur (14), qui a un point de congélation supérieur par rapport au liquide de couplage, et
**en ce que** le moyen de remplissage est une pompe qui pompe de l'eau à partir d'un autre côté de l'appareil ménager dans la récipient de couplage de chaleur (16) et la retourne de là-bas, ou **en ce que** le moyen de remplissage est un agencement de soupapes pour remplir de l'eau fraîche dans le récipient de couplage de chaleur (16) et ensuite pour décharger l'eau de nouveau.

2. Appareil ménager selon la revendication 1, le fluide de couplage consistant au moins partiellement d'eau.

3. Appareil ménager selon l'une des revendications précédentes, au moins une partie du récipient de couplage de chaleur (16) étant arrangé au-dessous de la chambre de processus (1) et au moins une partie de l'accumulateur de chaleur (14) étant arrangé au-dessous du récipient de couplage de chaleur (16).

4. Appareil ménager selon l'une des revendications précédentes, le liquide d'accumulateur de chaleur consistant au moins partiellement d'eau.

5. Appareil ménager selon l'une des revendications précédentes, l'appareil ménager ayant en outre une pompe de chaleur (7 - 10) pour transporter de la chaleur entre la chambre de processus (1) et l'accumulateur de chaleur (14).

6. Appareil ménager selon l'une des revendications précédentes, l'appareil ménager ayant une commande (20) pour traiter la marchandise à l'intérieur de la chambre de processus (1) pendant des multiple phases de processus, la commande (20) étant adaptée à remplir le récipient de couplage de chaleur (16) avec du liquide de couplage au moins partiellement pendant une partie des phases de processus et à vider le récipient de couplage de chaleur (16) au moins partiellement pendant une autre partie des phases de processus.

7. Appareil ménager selon la revendication 6, la commande (20) étant adaptée à chauffer la chambre de processus (1) à un premier instant quand le récipient de couplage de chaleur (16) est vide, et à extraire de la chaleur de la pleine chambre de processus (1) à un deuxième instant plus tard en remplissant le récipient de couplage de chaleur (16).

8. Appareil ménager selon l'une des revendications précédentes, l'accumulateur de chaleur (14) étant un accumulateur de chaleur latent, qui peut être surfondu, et l'appareil ménager ayant un initiateur pour déclencher une transition de phase dans l'accumulateur de chaleur latent surfondu ou bien aussi pour la supporter.

9. Appareil ménager selon l'une des revendications précédentes, l'appareil ménager étant un lave-vaisselle et la chambre de processus (1) étant une cuve du lave-vaisselle.

10. Appareil ménager selon la revendication 6 et 9, l'appareil ménager ayant une commande (20) adaptée
à chauffer la cuve avec la pompe de chaleur et à refroidir l'accumulateur de chaleur (14) quand le récipient de couplage de chaleur (16) est vide, pour un cycle de lavage principal et/ou une phase de rinçage, et ensuite
à remplir le récipient de couplage de chaleur (16) pour une phase de séchage afin de former une surface de refroidissement à la cuve.

11. Appareil ménager selon l'une des revendications 1 à 8, l'appareil ménager étant une machine à laver et la chambre de processus (1) étant une cuve de la machine à laver.

12. Appareil ménager selon la revendication 11, le récipient de couplage de chaleur (16) étant arrangé autour de la cuve et l'accumulateur de chaleur (14) étant arrangé autour du récipient de couplage de chaleur (16).

13. Appareil ménager selon l'une des revendications 11 ou 12 étant adapté à centrifuger la marchandise avec un plein récipient de couplage de chaleur (16).

14. Appareil ménager selon l'une des revendications 1 à 8, l'appareil ménager étant un four ou un cuiseur vapeur et la chambre de processus (1) étant une moufle du four ou bien du cuiseur vapeur.

15. Appareil ménager selon l'une des revendications précédentes, avec un récipient d'eau usée pour décharger de l'eau de processus usée de la chambre de processus (1), le récipient d'eau usée étant en contact thermique avec l'accumulateur de chaleur (14).
